# FASCICULE DE BREVET EUROPEEN

(11) **EP 4 098 099 B1**
(45) Date de publication et mention de la délivrance du brevet: **09.10.2024**
(21) Numéro de dépôt: 22174162.2
(22) Date de dépôt: 18.05.2022
(51) Int. Cl.: A01D 34/535

(54) **DISPOSITIF DE FAUCHAGE OU DE BROYAGE**
VORRICHTUNG ZUM MÄHEN ODER MULCHEN
DEVICE FOR MOWING OR MULCHING

(30) Priorité: 03.06.2021 FR 2105869
(43) Date de publication de la demande: 07.12.2022
(73) Titulaire: Actibac, 54550 Maizières (FR)
(72) Inventeur: BACHMANN, Christophe, 54000 NANCY (FR); BERNÉ, Stéphane, 54116 TANTONVILLE (FR)
(74) Mandataire: Loyer & Abello

(56) Documents cités:
- EP-A1- 2 878 188
- EP-B1- 3 232 764
- FR-A1- 2 944 182

## Description

### Domaine technique

L'invention se rapporte au domaine des dispositifs de fauchage ou de broyage.

De tels dispositifs de fauchage ou de broyage équipent notamment des machines pour la coupe et/ou le broyage des végétaux telles que les faucheuses rotatives utilisées pour la coupe des cultures, les épareuses utilisées pour l'entretien des espaces verts ou des accotements routiers.

De tels dispositifs sont également susceptibles d'être utilisés pour le broyage de pierres.

### Arrière-plan technologique

Les dispositifs de fauchage ou de broyage comportent un arbre rotatif portant des outils travaillant à la manière de fléaux au cours de la rotation de l'arbre. L'arbre rotatif est équipé des chapes positionnées perpendiculairement à son axe et portant des supports axiaux, disposés parallèlement à l'axe de l'arbre rotatif, et supportant les outils. Les outils peuvent être directement montés sur les supports axiaux. Dans ce cas, les outils sont chacun équipés d'un orifice de montage au travers duquel passe un des supports axiaux. Les outils peuvent également être montés sur les supports axiaux par l'intermédiaire de manilles. Dans ce cas, chaque manille comporte, d'une part, des orifices de montage au travers desquelles passe un support axial porté par des chapes solidaires de l'arbre rotatif et, d'autre part, un support axial passant au travers d'un orifice de montage de l'outil. Ces montages sont réalisés de manière à ce que les outils et les manilles puissent tourner librement par rapport aux supports axiaux.

Ainsi, d'une part, lorsque l'arbre rotatif est entraîné en rotation, l'outil est apte à se disposer dans une position de travail dans laquelle il s'étend radialement par rapport à l'arbre rotatif sous l'effet de la force centrifuge. D'autre part, les outils peuvent s'escamoter par la rotation de la manille et/ou la rotation de l'outil de sorte à s'écarter de leur position de travail lorsqu'ils entrent en contact avec des obstacles qu'ils ne peuvent couper ou broyer. Un tel dispositif de fauchage est notamment décrit dans le brevet français FR2944182 ou dans le brevet européen EP3232764.

En outre, dans les documents précités, les supports axiaux et les orifices de montages présentent des formes s'adaptant les unes dans les autres lorsque l'outil est dans sa position de travail de sorte à favoriser le maintien de l'outil en position de travail. En particulier, le brevet européen EP3232764 enseigne de prévoir des surfaces circulaires de l'orifice de montage et du support axial qui coopèrent l'une avec l'autre sur une périphérie plus grande qu'un quart de cercle.

Il a toutefois été constaté que les formes des supports axiaux et des orifices de montage sont complexes à réaliser. De plus, pour garantir la précision et la stabilité de la position de travail de l'outil, les supports axiaux et les orifices de montage respectent de faibles tolérances de fabrication.

### Résumé

Une idée à la base de l'invention est de proposer un dispositif de fauchage ou de broyage du type précité qui soit plus simple à fabriquer et qui permette de garantir la stabilité de la position de travail des outils même lorsque les tolérances de fabrication sont moins strictes.

Selon un mode de réalisation, l'invention fournit un dispositif de fauchage ou de broyage comportant un arbre rotatif mobile en rotation autour d'un axe X et portant une pluralité d'outils de fauchage ou de broyage faisant fléaux, chaque outil étant monté directement ou indirectement sur l'arbre rotatif au moyen d'au moins un liaison articulée comportant un orifice de montage défini par un bord périphérique et un support axial passant au travers de l'orifice de montage, l'orifice de montage présentant une section supérieure à une section du support axial de sorte à autoriser un pivotement de l'orifice de montage autour du support axial ; et dans lequel l'outil est configuré pour se positionner, sous l'effet de la force centrifuge, dans une position de travail dans laquelle :
- l'outil s'étend radialement et est écarté de l'arbre rotatif ;
- le bord périphérique de l'orifice de montage et le support axial sont en contact l'un contre l'autre exclusivement par l'intermédiaire de deux bossages, les deux bossages faisant saillie depuis le bord périphérique de l'orifice de montage en direction du support axial ou depuis le support axial en direction du bord périphérique de l'orifice de montage et formant ainsi deux zones de contact localisées de part et d'autre d'un plan P radial passant par le centre de gravité de l'outil et l'axe X, et dans laquelle
- l'un parmi le bord périphérique de l'orifice de montage et le support axial exerce sur l'autre, dans les deux zones de contact, deux forces de réaction normales qui présentent des composantes circonférentielles de sens opposés.

Ainsi, en position de travail, le bord périphérique de l'orifice de montage et le support axial sont en contact dans deux zones de contact réparties de part et d'autre du centre de gravité de l'outil, ce qui permet de stabiliser la position de travail sans avoir recours à des formes s'adaptant précisément les unes dans les autres, qui sont complexes à réaliser et entraînent une augmentation de l'encombrement de la liaison articulée.

En outre, lorsque l'outil est en position de travail, les forces de réaction normales exercées par le bord périphérique de l'orifice de montage ou par le support axial présentent des composantes circonférentielles de sens opposés, ce qui permet d'assurer une stabilité de l'orifice de montage par rapport au support axial selon une direction circonférentielle dirigée orthogonalement à l'axe X et orthogonalement à la direction radiale.

Selon des modes de réalisation, un tel dispositif de fauchage ou de broyage comporte une ou plusieurs des caractéristiques suivantes.

Selon un mode de réalisation, le point d'intersection I est positionné dans le plan P.

Selon un mode de réalisation, les deux zones de contact sont des zones de contact linéiques.

Selon un mode de réalisation, les deux bossages font saillie depuis une portion radialement interne du bord périphérique de l'orifice de montage vers l'intérieur de l'orifice de montage et en direction du plan P.

Selon un mode de réalisation, le support axial présente au moins une portion en saillie qui est configurée pour être positionnée entre les deux bossages lorsque l'outil est en position de travail. Une telle saillie qui exerce une résistance supplémentaire au déplacement relatif de l'outil par rapport à sa position de travail.

Selon un mode de réalisation, la portion en saillie présente une forme correspondant à un espace de l'ouverture de montage ménagé entre les deux bossages.

Selon un mode de réalisation, le support axial présente deux portions en saillie de part et d'autre de chaque zone de contact. Ceci permet d'exercer une résistance encore plus importante au déplacement relatif de l'outil par rapport à sa position de travail.

Selon un mode de réalisation, le support axial présente une forme cylindrique de révolution présentant des génératrices parallèles à l'axe X. Ceci permet de faciliter la fabrication de la liaison articulée.

Selon un mode de réalisation, chaque outil est monté sur l'arbre par l'intermédiaire d'une manille et de deux liaisons articulées et la manille est liée à l'outil par l'une des deux liaisons articulées et à l'arbre rotatif par l'intermédiaire de l'autre des deux liaisons articulées.

Selon un mode de réalisation, l'outil est directement monté sur l'arbre rotatif par l'intermédiaire de la liaison articulée.

Selon un mode de réalisation, l'outil comporte un couteau et l'orifice de montage de la liaison articulée.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig. 1] La figure 1 est une vue partielle en perspective d'un outil d'un dispositif de fauchage ou de broyage et d'une liaison articulée destinée à relier l'outil à un arbre rotatif selon un premier mode de réalisation.
[Fig. 2] La figure 2 est une autre vue partielle en perspective du l'outil et de la liaison articulée de la figure 1.
[Fig. 3] La figure 3 est une vue latérale d'un arbre rotatif et d'une chape destinée à fixer la liaison articulée illustrée sur les figures 1 et 2 audit arbre rotatif.
[Fig. 4] La figure 4 est une vue en coupe de l'outil et de la liaison articulée des figures 1 et 2.
[Fig. 5] La figure 5 est une vue de détail d'un orifice de montage et d'un support axial de la figure 4.
[Fig. 6] La figure 6 est une vue en coupe illustrant un orifice de montage et un support axial selon une variante de réalisation.

### Description des modes de réalisation

Dans la description et les revendications, on utilisera, les termes "externe" et "interne" ainsi que les orientations "circonférentielle" et "radiale" pour désigner, selon les définitions données dans la description, des éléments du dispositif de fauchage ou de broyage. Par convention, l'orientation "radiale" est dirigée orthogonalement à l'axe X de rotation de l'arbre rotatif et, de l'intérieur vers l'extérieur en s'éloignant dudit axe X et l'orientation "circonférentielle" est dirigée orthogonalement à l'axe X et orthogonalement à la direction radiale.

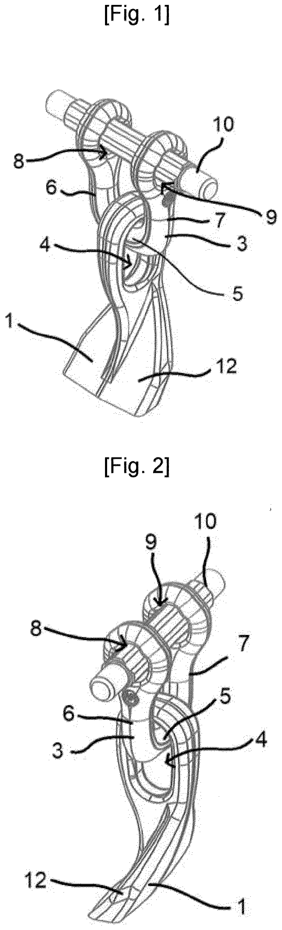

Les figures 1 à 5 représentent un dispositif de fauchage ou de broyage selon un premier mode de réalisation.

Le dispositif comporte une pluralité d'outils 1 de fauchage ou de broyage, dont un seul est ici représenté, qui sont solidarisés à un arbre rotatif 2, généralement creux, représenté sur la figure 2. L'arbre rotatif 2 peut être monté en rotation sur une machine de coupe ou de broyage, selon un axe de rotation X qui peut être horizontal, vertical ou oblique.

L'outil 1 est monté articulé sur l'arbre rotatif 2 soit directement soit par l'intermédiaire d'une manille 3, comme dans le mode de réalisation représenté. L'outil 1 est monté articulé par rapport à l'arbre rotatif 2 de sorte à être apte, d'une part, à se positionner sous l'effet de la force centrifuge engendré par la rotation de l'arbre rotatif 2 dans une position de travail dans laquelle il s'étend radialement par rapport à l'arbre rotatif 2 et, d'autre part, à s'escamoter en s'écartant de sa position de travail lorsque l'outil 1 rencontre un obstacle accidentel. L'outil 1 comporte un couteau 12 qui constitue une partie travaillante munie de portions biseautées permettant de couper ou de broyer des végétaux.

Sur les figures 1, 2 et 4, l'outil 1 est porté par la manille 3 et comporte à cet effet un orifice de montage 4 au travers duquel passe un support axial 5 de la manille 3. La manille 3 comporte deux branches 6, 7 qui sont chacune solidarisées à l'une des extrémités du support axial 5 et qui s'étendent de part et d'autre de l'outil 1. Chacune des branches 6, 7 comportent un orifice de montage 8, 9 au travers duquel passe un support axial 10 fixé à l'arbre rotatif 2.

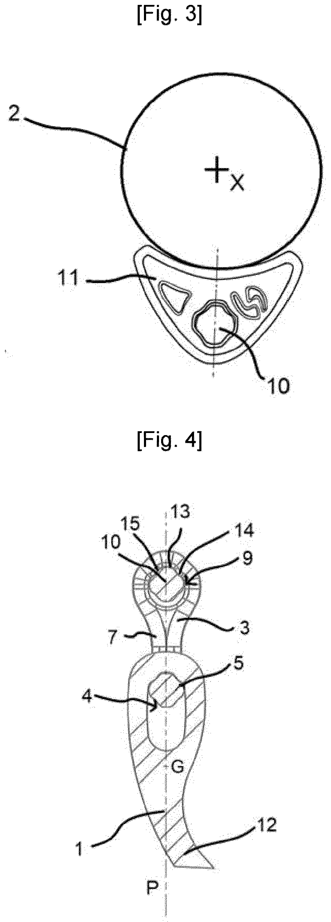

Le support axial 10 s'étend parallèlement à l'axe de rotation de l'axe rotatif 2 et est porté par deux chapes 11, dont l'une est représentée sur la figure 3, qui sont fixées à l'arbre rotatif 2. Le support axial 10 est monté à travers de perçages ménagés dans lesdites chapes 11.

Chaque support axial 5, 10 constitue, avec les orifices de montages 4, 8, 9 dans lequel il passe, une liaison articulée créant une précontrainte favorisant le maintien de l'outil dans sa position de travail, illustrée sur les figures 1, 2 et 3. De plus, les orifices de montage 4, 8, 9 présentent une section supérieure à celle du support axial 5, 10 correspondant de sorte à autoriser un pivotement de l'orifice de montage 4, 8, 9 autour du support axial 5, 10 correspondant. Ceci permet à l'outil 1 de s'escamoter par rapport à sa position de travail lorsqu'il rencontre un obstacle accidentel, tel qu'une végétation trop dense, une pierre, une souche ou une branche trop épaisse, qui génère un effort suffisant sur l'outil 1 pour le déséquilibrer hors de sa position de travail.

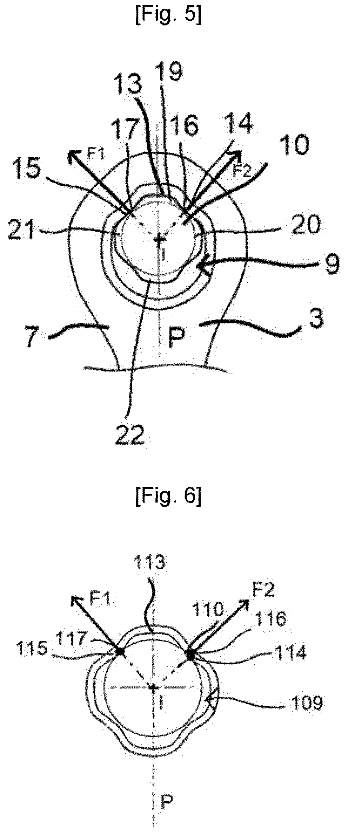

En relation avec la figure 5, on décrit la structure d'un support axial 10 et d'un orifice de montage 9 ménagé à l'extrémité de l'une des branches 7 de la manille 3 selon un premier mode de réalisation. On notera que l'orifice de montage 8 ménagé à l'extrémité de l'autre branche 6 de la manille 3 présente une forme identique à celle de l'orifice de montage 9 illustrée sur la figure 5. De plus, l'orifice de montage 4 de l'outil 1 ainsi que le support axial 5 de la manille 3 présentent respectivement une structure similaire à celle de l'orifice de montage 9 et du support axial 10.

L'orifice de montage 9 est défini par un bord périphérique 13 qui présente une portion radialement interne présentant deux bossages 14, 15. Les deux bossages 14, 15 sont symétriques l'un à l'autre par rapport à un plan P qui s'étend radialement lorsque l'outil est en position de travail. Les deux bossages 14, 15 font saillie depuis la portion radialement interne du bord périphérique 13 de l'orifice de montage 9 vers l'intérieur de l'orifice de montage et sont orientés en direction du plan P.

Par ailleurs, comme représenté sur la figure 4, lorsque l'outil 1 est en position de travail, ledit plan P passe par le centre de gravité G de l'outil 1 dont la position est représentée approximativement sur la figure 4. Ainsi, les deux bossages 14, 15 s'étendent de part et d'autre du plan P qui passe par le centre de gravité G de l'outil 1 et par l'axe X.

Lorsque l'outil 1 est dans sa position de travail, le bord périphérique 13 de l'orifice de montage 9 et le support axial 10 sont en contact l'un contre l'autre exclusivement par l'intermédiaire des deux bossages 14, 15. Ainsi, dans la position de travail de l'outil 1, le bord périphérique 13 de l'orifice de montage 9 et le support axial 10 coopèrent l'un avec l'autre par l'intermédiaire de deux zones de contact 16, 17 linéiques, représentées schématiquement sur la figure 5. Au niveau de chacune des deux zones de contact 16, 17, le bord périphérique 13 de l'orifice de montage 9 exercent sur le support axial 10 une force de contact localisée. En réaction, le support axial 10 exerce sur le bord périphérique 14 de l'orifice de montage 9, des forces de réaction normales représentée par les flèches F1 et F2. Les forces de réaction normales F1 et F2 présentent des composantes circonférentielles ayant des sens opposés. Ceci permet d'assurer l'équilibre de l'outil 1 dans sa position de travail, selon la direction circonférentielle. En outre, les directions des forces de réaction normales F1 et F2 du support axial 10 sont sécantes en un point d'intersection I qui est avantageusement positionné dans le plan P.

De manière avantageuse, dans le mode de réalisation des figures 1 à 5, le support axial 10 présente au moins une portion en saillie 19 qui fait saillie entre les deux bossages 14, 15, avec une forme sensiblement complémentaire à la forme du bord périphérique 13 de l'orifice de montage 9 entre les deux bossages 14, 15, sans pour autant être en contact avec ledit bord périphérique 13 lorsque l'outil 1 est en position de travail. Ceci permet, sous l'effet de la force centrifuge s'exerçant sur la manille 3 et sur l'outil 1 de réaliser un emboîtement qui exerce une résistance supplémentaire au déplacement relatif de l'outil 1 par rapport à sa position de travail. De manière avantageuse, le support axial 10 présente au moins trois portions en saillie 19, 20, 21 qui sont agencées de telle sorte que, lorsque l'outil 1 est en position de travail, chacune des deux zones de contact 16, 17 est disposée entre deux portions en saillie 19, 20 et 19, 21. Dans le mode de réalisation représenté, le support axial 10 comporte quatre portions en saillie 19, 20, 21, 22 qui sont symétrique deux à deux par rapport à un axe de symétrie.

Selon une variante de réalisation non illustrée, les structures du bord périphérique 13 de l'orifice de montage 9 et celle du support axial 10 sont inversées. En d'autres termes, lorsque l'outil 1 est en position de travail, le support axial 10 et le bord périphérique 13 de l'orifice de montage 9 coopèrent l'un avec l'autre par l'intermédiaire de deux bossages faisant saillie radialement vers l'extérieur depuis le support axial 10 et disposés de part et d'autre du plan P. Dans une telle variante de réalisation, c'est le bord périphérique 13 de l'orifice de montage 9 qui présente une portion en saillie qui fait saillie entre les deux bossages du support axial 10 lorsque l'outil est en position de travail.

Le fonctionnement du dispositif ainsi décrit est le suivant. Lorsque l'arbre rotatif 2 de la machine de fauchage ou de broyage tourne à grande vitesse, la manille 3 et l'outil 1 prennent, sous l'effet de la force centrifuge, la position de travail représentée sur les figures 1, 2, 4 et 5.

Lorsque l'outil 1 rencontre un obstacle trop résistant, celle-ci exerce sur l'outil 1 un effort suffisant pour déséquilibrer l'outil 1 hors de sa position de travail et entraîner un escamotage de la manille 3 et de l'outil 1.

Grâce à la présence des deux bossages 14, 15, des efforts de frottement s'exercent entre le bord périphérique 13 de l'orifice de montage 9 et le support axial 10 en deux points qui s'opposent à l'oscillation de l'outil 1 autour de sa position de travail. La position de travail étant plus stable, l'outil 1 retrouvent plus rapidement sa position de travail après un escamotage.

On notera qu'un mode de réalisation dans lequel l'outil 1 est associé à l'arbre rotatif 2 par l'intermédiaire d'une manille 3 permet un double escamotage puisque l'outil 1 est susceptible de pivoter autour du support axial 5 de la manille 3 et que celle-ci est également susceptible de pivoter autour du support axial 10 porté par l'arbre rotatif 2. Toutefois, dans un mode réalisation non illustré, l'outil 1 est solidarisé directement au support axial 10 porté par l'arbre rotatif 2, c'est-à-dire sans l'aide d'une manille 3, le support axial 10 sert alors de support à l'outil 1 et est par conséquent introduit à travers l'orifice de montage 4 de l'outil 1.

La figure 6 illustre la structure d'un support axial 110 et d'un orifice de montage 109 selon un second mode de réalisation. Sur cette figure, les éléments similaires, identiques ou réalisant la même fonction que ceux du mode de réalisation présenté ci-dessus sont augmentés de 100. Ce mode de réalisation diffère de celui décrit ci-dessus en ce que le support axial 110 présente une forme de cylindre de révolution. Comme dans le mode de réalisation précédent, lorsque l'outil est en position de travail, le bord périphérique 113 de l'orifice de montage 109 et le support axial 110 coopèrent l'un avec l'autre exclusivement par l'intermédiaire des deux bossages 114, 115 ménagés dans le bord périphérique 113 de l'orifice de montage 109 et les deux bossages 114, 115 sont positionnés de part et d'autre du plan P passant par l'axe X et par le centre de gravité G de l'outil 1. Ce mode de réalisation est particulièrement avantageux en ce que le support axial 110 présente une forme de révolution particulièrement simple à réaliser.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

En particulier, notons que dans d'autres modes de réalisation non représentés, il peut être envisagé d'inverser la structure des éléments de telle sorte que, d'une part, l'outil comporte un support axial et non un orifice de montage, et que l'élément de liaison porté par l'arbre rotatif présente un orifice de montage et non un support axial.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Dispositif de fauchage ou de broyage comportant un arbre rotatif (2) mobile en rotation autour d'un axe X et portant une pluralité d'outils (1) de fauchage ou de broyage faisant fléaux, chaque outil (1) étant monté directement ou indirectement sur l'arbre rotatif (2) au moyen d'au moins un liaison articulée comportant un orifice de montage (4, 8, 9, 109) défini par un bord périphérique (13, 113) et un support axial (5, 10, 110) passant au travers de l'orifice de montage (4, 8, 9, 109), l'orifice de montage (4, 8, 9, 109) présentant une section supérieure à une section du support axial (5, 10, 110) de sorte à autoriser un pivotement de l'orifice de montage (4, 8, 9, 109) autour du support axial (5, 10, 110) ; et
dans lequel l'outil (1) est configuré pour se positionner, sous l'effet de la force centrifuge, dans une position de travail dans laquelle :
- l'outil (1) s'étend radialement et est écarté de l'arbre rotatif (2) ;
- le bord périphérique (13, 113) de l'orifice de montage (4, 8, 9, 109) et le support axial (5, 10, 110) sont en contact l'un contre l'autre exclusivement par l'intermédiaire de deux bossages (14, 15, 114, 115) faisant saillie depuis le bord périphérique (13, 113) de l'orifice de montage (4, 8, 9, 109) en direction du support axial (5, 10, 110) et formant ainsi deux zones de contact localisées de part et d'autre d'un plan P radial passant par le centre de gravité de l'outil (1) et l'axe X, l'un parmi le bord périphérique (13, 113) de l'orifice de montage (4, 8, 9, 109) et le support axial (5, 10, 110) exerce sur l'autre, dans les deux zones de contact, deux forces de réaction normales qui présentent des composantes circonférentielles de sens opposés ledit dispositif de fauchage ou de broyage étant **caractérisé en ce que** les deux bossages (14, 15, 114, 115) font saillie depuis une portion radialement interne du bord périphérique (13, 113) de l'orifice de montage (4, 8, 9, 109) vers l'intérieur de l'orifice de montage (4, 8, 9, 109) et en direction du plan P..

2. Dispositif selon la revendication 1, dans lequel les deux bossages (14, 15, 114, 115) sont orientés de telle sorte que les directions des deux forces de réaction normales sont sécantes en un point d'intersection I qui est positionné dans le plan P.

3. Dispositif selon la revendication 1 ou 2, dans lequel les deux zones de contact (15, 16, 115, 116) sont des zones de contact linéiques.

4. Dispositif selon l'une quelconque des revendications 1 à 3, dans lequel le support axial (5, 10, 110) présente au moins une portion en saillie (19) qui est configurée pour être positionné entre les deux bossages (14, 15, 114, 115) lorsque l'outil (1) est en position de travail.

5. Dispositif selon l'une quelconque des revendications 1 à 4, dans lequel le support axial (5, 10, 110) présente une forme cylindrique de révolution présentant des génératrices parallèles à l'axe X.

6. Dispositif selon l'une quelconque des revendications 1 à 5, dans lequel chaque outil (1) est monté sur l'arbre par l'intermédiaire d'une manille et de deux liaisons articulées et la manille est liée à l'outil (1) par l'une des deux liaisons articulées et à l'arbre rotatif (2) par l'intermédiaire de l'autre des deux liaisons articulées.

7. Dispositif selon l'une quelconque des revendications 1 à 6, dans lequel l'outil (1) est directement monté sur l'arbre rotatif (2) par l'intermédiaire de la liaison articulée.

8. Dispositif selon l'une quelconque des revendications 1 à 7, dans lequel l'outil (1) comporte un couteau (12) et l'orifice de montage (4, 8, 9, 109) de la liaison articulée.

## Patentansprüche

1. Vorrichtung zum Mähen oder Mulchen umfassend eine mobile Drehwelle (2), die um eine Achse X drehbar ist und eine Vielzahl von Werkzeugen (1) zum Mähen oder Mulchen in Form von Dreschen trägt, wobei jedes Werkzeug (1) entweder direkt oder indirekt an der Drehwelle (2) mittels mindestens einer Gelenkverbindung angeordnet ist, die eine Montageausnehmung (4, 8, 9, 113) umfasst, die durch eine periphere Kante (13, 113) und eine axiale Stütze (5, 10, 110) definiert ist, die durch die Montageausnehmung (4, 8, 9, 109) verläuft, wobei die Montageausnehmung (4, 8, 9, 109) einen Querschnitt aufweist, der größer als ein Querschnitt der axialen Stütze (5, 10, 110) ist, so dass die Montageausnehmung (4, 8, 9, 109) um die axiale Stütze (5, 10, 110) schwenken kann; und
wobei das Werkzeug (1) so konfiguriert ist, dass es sich unter der Wirkung der Zentrifugalkraft in einer Arbeitsstellung positioniert, in der:
- das Werkzeug (1) sich radial erstreckt und von der Drehwelle (2) wegbewegt ist;
- die periphere Kante (13, 113) der Montageausnehmung (4, 8, 9, 109) und die axiale Stütze (5, 10, 110) ausschließlich über zwei Vorsprünge (14, 15, 114, 115) miteinander in Kontakt stehen, die von der peripheren Kante (13, 113) der Montageausnehmung (4, 8, 9, 109) in Richtung der axialen Stütze vorstehen und so zwei Kontaktbereichen bilden, die auf beiden Seiten einer radialen Ebene P angeordnet sind, die durch den Schwerpunkt des Werkzeugs (1) und die Achse X verläuft, wobei eine von der peripheren Kante (13, 113) der Montageausnehmung (4, 8, 9, 109) und der axialen Stütze (5, 10, 110) auf die andere in den beiden Kontaktbereichen zwei übliche Reaktionskräfte, die zirkumferentielle Komponenten mit entgegengesetzter Richtung aufweisen, ausübt, wobei die Vorrichtung zum Mähen oder Mulchen **dadurch gekennzeichnet ist, dass** die beiden Vorsprünge (14, 15, 114, 115) von einem radial inneren Abschnitt der peripheren Kante (13, 113) der Montageausnehmung (4, 8, 9, 109) in Richtung des Inneren der Montageausnehmung (4, 8, 9, 109) und in Richtung der Ebene P vorstehen.

2. Vorrichtung nach Anspruch 1, wobei die beiden Vorsprünge (14, 15, 114, 115) so ausgerichtet sind, dass die Richtungen der beiden üblichen Reaktionskräfte sich in einem Schnittpunkt I schneiden, der in der Ebene P angeordnet ist.

3. Vorrichtung nach Anspruch 1 oder 2, wobei die beiden Kontaktbereiche (15, 16, 115, 116) linienförmige Kontaktbereiche sind.

4. Vorrichtung nach einem der Ansprüche 1 bis 3, wobei die axiale Stütze (5, 10, 110) mindestens einen vorstehenden Abschnitt (19) aufweist, der so konfiguriert ist, dass dieser zwischen den beiden Vorsprüngen (14, 15, 114, 115) angeordnet ist, wenn das Werkzeug (1) in der Arbeitsstellung ist.

5. Vorrichtung nach einem der Ansprüche 1 bis 4, wobei die axiale Stütze (5, 10, 110) eine zylindrische Form mit parallel zur X-Achse verlaufenden Mantellinien aufweist.

6. Vorrichtung nach einem der Ansprüche 1 bis 5, wobei jedes Werkzeug (1) über einen Schäkel und zwei Gelenkverbindungen an der Drehwelle angeordnet ist, und wobei der Schäkel über eine der beiden Gelenkverbindungen mit dem Werkzeug (1) und über die andere der beiden Gelenkverbindungen mit der Drehwelle (2) verbunden ist.

7. Vorrichtung nach einem der Ansprüche 1 bis 6, wobei das Werkzeug (1) über die Gelenkverbindung direkt an der Drehwelle (2) angeordnet ist.

8. Vorrichtung nach einem der Ansprüche 1 bis 7, wobei das Werkzeug (1) ein Messer (12) und die Montageausnehmung (4, 8, 9, 109) der Gelenkverbindung umfasst.

## Claims

1. Mowing or grinding device comprising a rotary shaft (2) which is mobile in rotation about an axis X and carries a plurality of mowing or grinding tools (1) forming flails, each tool (1) being mounted directly or indirectly on the rotary shaft (2) by means of at least one articulated link comprising a mounting orifice (4, 8, 9, 109) defined by a peripheral edge (13, 113) and an axial support (5, 10, 110) passing through the mounting orifice (4, 8, 9, 109), the mounting orifice (4, 8, 9, 109) having a cross section larger than a cross section of the axial support (5, 10, 110) so as to allow pivoting of the mounting orifice (4, 8, 9, 109) about the axial support (5, 10, 110); and
wherein the tool (1) is configured in order to be positioned, under the effect of the centrifugal force, in a working position in which:
- the tool (1) extends radially and extends away from the rotary shaft (2);
- the peripheral edge (13, 113) of the mounting orifice (4, 8, 9, 109) and the axial support (5, 10, 110) are in contact against one another only by means of two bosses (14, 15, 114, 115) protruding from the peripheral edge (13, 113) of the mounting orifice (4, 8, 9, 109) in the direction of the axial support (5, 10, 110) and thus forming two contact zones located on either side of a radial plane P passing through the centre of gravity of the tool (1) and the axis X, one out of the peripheral edge (13, 113) of the mounting orifice (4, 8, 9, 109) and the axial support (5, 10, 110) exerts on the other, in the two contact zones, two normal reaction forces which have circumferential components with opposite directions, said mowing or grinding device being **characterised in that** the two bosses (14, 15, 114, 115) protruding from a radially internal portion of the peripheral edge (13, 113) of the mounting orifice (4, 8, 9, 109) towards the interior of the mounting orifice (4, 8, 9, 109) and in the direction of the plane P.

2. Device according to Claim 1, wherein the two bosses (14, 15, 114, 115) are oriented in such a way that the directions of the two normal reaction forces are secant at a point of intersection I which is positioned in the plane P.

3. Device according to Claim 1 or 2, wherein the two contact zones (15, 16, 115, 116) are linear contact zones.

4. Device according to any one of Claims 1 to 3, wherein the axial support (5, 10, 110) has at least one protruding portion (19) which is configured in order to be positioned between the two bosses (14, 15, 114, 115) when the tool (1) is in the working position.

5. Device according to any one of Claims 1 to 4, wherein the axial support (5, 10, 110) has the shape of a cylinder of revolution having generatrices parallel to the axis X.

6. Device according to any one of Claims 1 to 5, wherein each tool (1) is mounted on the shaft by means of a clevis and two articulated links, and the clevis is linked to the tool (1) by one of the two articulated links and to the rotary shaft (2) by means of the other of the two articulated links.

7. Device according to any one of Claims 1 to 6, wherein the tool (1) is mounted directly on the rotary shaft (2) by means of the articulated link.

8. Device according to any one of Claims 1 to 7, wherein the tool (1) comprises a blade (12) and the mounting orifice (4, 8, 9, 109) of the articulated link.
